# EUROPÄISCHE PATENTSCHRIFT

(11) **EP 0 816 151 B1**
(45) Veröffentlichungstag und Bekanntmachung des Hinweises auf die Patenterteilung: **17.05.2000**
(21) Anmeldenummer: 97110744.6
(22) Anmeldetag: 01.07.1997
(51) Int. Cl.: B60K 15/03

(54) **Kraftstoffbehälter**
Fuel tank
Réservoir de carburant

(30) Priorität: 06.07.1996 DE 19627395
(43) Veröffentlichungstag der Anmeldung: 07.01.1998
(73) Patentinhaber: Kautex Textron GmbH & Co. KG., 53229 Bonn (DE)
(72) Erfinder: Stangier, Oskar, 53229 Bonn (DE)
(74) Vertreter: Koepsell, Helmut, Dipl.-Ing.

(56) Entgegenhaltungen:
- DE-A- 2 936 773
- DE-U- 9 106 732
- DE-U- 9 205 132
- FR-A- 2 596 333
- FR-A- 2 635 055
- US-A- 4 998 639

## Beschreibung

Die Erfindung betrifft einen Kraftstoffbehälter gemäß dem Oberbegriff des Anspruches 1.

Bei einem aus DE-PS 42 40 629 bekannten Kraftstoffbehälter ist die Anordnung so getroffen, daß der Halterungsdeckel ausschließlich auf dem gummielastischen Dichtring aufliegt, um so unterschiedlich große Anpreßkräfte aufbringen und vorhandene Fertigungstoleranzen ausgleichen zu können. Bei dieser Anordnung ist der gummielastische Dichtring Konstruktionsteil der Verbindung zwischen dem Behälter und dem Halterungsdeckel. Dies hat den Nachteil, daß der Dichtring zwei Funktionen zu erfüllen hat, nämlich die des Abdichtens einerseits und die eines Konstruktionsteils zur Übertragung von Kräften andererseits mit der Folge, daß eine Lageveränderung des Dichtringes, die z. B. durch Quellen oder Kriechen des ihn bildenden Materials z. b. aufgrund der Einwirkung von Kraftstoff verursacht werden kann, möglicherweise auch zugleich zu einer Beeinflussung der Ausgestaltung der Verbindung führt.

Ferner ist aus DE-OS 31 35 982 ein Kraftstoffbehälter aus thermoplastischem Kunststoff für Kraftfahrzeuge mit einem Einfüllstutzen und einem damit verbundenen Anschlußsockel bekannt, der den Verschlußdeckel des Einfüllstutzens aufnimmt. Hier ist ein Dichtring zwischen dem Einfüllstutzen und dem Anschlußsockel angeordnet, der über den elastischen Dichtring gegen die Anlagefläche des Einfüllstutzens abgestützt ist. Auch hier besteht die Zielsetzung der Anordnung darin, über die Elastizität des Dichtringes Toleranzen auszugleichen, die durch Maßabweichungen und unterschiedliche Dehnungskoeffizienten verursacht werden, so daß im wesentlichen auch die bereits im Zusammenhang mit dem Kraftstoffbehälter gemäß DE-PS 42 40 629 beschriebenen Nachteile auftreten.

Weiterhin offenbart US-A-4.998.639, die etwa dem Oberbegriff des Anspruches 1 entspricht, einen Kraftstofftank aus Kunststoff, der mit einer Öffnung versehen ist, die durch einen Verschlußdeckel dicht verschlossen ist. Dabei wird die Öffnung jedoch nicht von einem Stutzen begrenzt. Vielmehr erfährt der die Öffnung begrenzende Randbereich der Wandung des Tankes, an welchem eine einen Dichtring aufnehmende Nut angebracht ist, keine besondere Abstützung oder Versteifung zur Aufnahme der durch den Verschlußdeckel auf die Tankwandung ausgeübten Kraft, so daß keine optimalen Voraussetzungen für eine dauerhafte dichte Verbindung vorliegen.

Demzufolge liegt der Erfindung die Aufgabe zugrunde, einen Kraftstoffbehälter der einleitend beschriebenen Art so auszugestalten, daß die Nachteile bekannter derartiger Behälter vermieden werden. Insbesondere soll der Dichtring keine Funktion als Konstruktionsteil der Verbindung haben, damit verhindert wird, daß irgendwelche Einwirkungen auf den Dichtring beispielsweise durch Quellen und Kriechen des ihn bildenden Materials die Ausgestaltung der Verbindung zwischen Kraftstoffbehälter und Deckel und somit die Wirksamkeit der Verbindung beeinflussen können.

Diese Aufgabe wird unter Verwendung der im Kennzeichen des Anspruches 1 angegebenen Merkmale gelöst.

Zur Erzielung des erforderlichen Dichteffektes wird es erforderlich sein, daß der Dichtring in durch den Halterungsdeckel unbeanspruchtem Zustand in Richtung auf das jeweils andere Teil der Verbindung, also bei Anordnung in der Nut im Stutzen des Kraftstoffbehälters in Richtung auf den Halterungsdeckel vorsteht. Die Tiefe der Nut bzw. die Eindringtiefe des im allgemeinen als O-Ring ausgebildeten unverformten Dichtrings in die Nut ist somit so zu wählen, daß sie kleiner ist als der Durchmesser des Dichtrings. Dabei muß der Querschnitt der Nut jedoch so groß sein, daß sie den durch Stutzen und Halterungsdeckel druckbeaufschlagten Dichtring bei entsprechender Querschnittsverformung desselben vollständig aufnehmen kann, um so zu erreichen, daß einerseits eine einwandfreie Dichtung gewährleistet ist, andererseits der Dichtring keine Komponente der tragenden Struktur der Verbindungsanordnung darstellt.

Das den Halterungdeckel in seiner Position sichernde Befestigungsmittel kann ein Steckverschluss nach Art eines Bajonettverschlusses sein dessen Haltering am Stutzen angeordnet ist und mit einem nach Art eines Bajonettverschlusses mit einen Klemmring zusammenwirkt, wobei letzterer den Halterungsdeckel an seinem Umfangsrand übergreift und in Richtung auf die Stirnseite des Stutzens beaufschlagt.

Eine andere Möglichkeit besteht darin, den Stutzen außenseitig mit einem Gewinde zu versehen, auf welches eine Überwurfmutter aufschraubbar ist, deren Randbereich den Randbereich des Halterungsdeckels übergreift.

In jedem Fall soll die Möglichkeit bestehen, den Halterungsdeckel, an welchem z. B. innerhalb des Kraftstoffbehälters angeordnete bzw. in diesen führende Pumpensätze, Entnahmeleitungen, Füllstandgeber od. dergl. angebracht sein können, in einer bestimmten Ausrichtung bezüglich seiner Umfangsposition anzubringen und mit dem Kraftstoffbehälter zu verbinden, um so eine definierte Anordnung der am Halterungsdeckel angebrachten bzw. mit diesem verbundenen Teilen zum Tank zu gewährleisten. Dies kann in üblicher Weise dadurch erreicht werden, daß am Stutzen, an den Befestigungsmitteln und am Halterungsdeckel einen Formschluß bewirkende Mittel vorgesehen sind, die ein Anbringen bzw. Einbauen der zusammenwirkenden Teile lediglich in vorherbestimmten Positionen zulassen, um so zu erreichen, daß Kraftstoffpumpe, Füllstandsanzeiger und andere Mittel und Einrichtungen innerhalb des Kraftstoffbehälters eine bestimmte Raumlage einnehmen, die auch nach Lösen der Verbindung zwischen Halterungsdeckel und Kraftstoffbehälter bei Wiederherstellen derselben ohne weiteres wieder reproduzierbar ist.

In der Zeichnung sind Ausführungsbeispiele der Erfindung dargestellt. Es zeigen:
- Fig. 1: einen Querschnitt durch den Stutzen eines Kraftstoffbehälters mit darauf angeordnetem Halterungsdeckel, der durch einen Klemmring gehalten wird,
- Fig. 2: eine der Fig. 1 entsprechende Darstellung einer zweiten Ausführungsform.

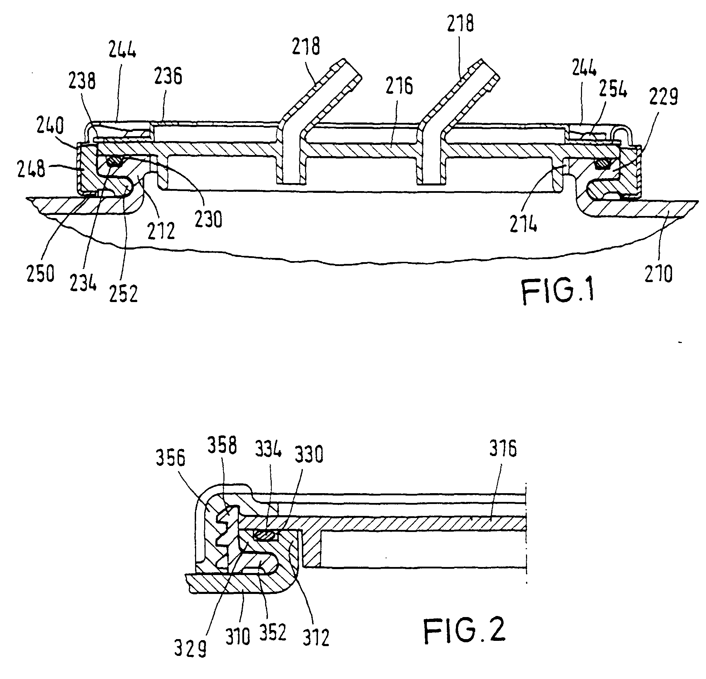

Fig. 1 zeigt einen Ausschnitt aus einem Kraftstoffbehälter 210, der in ein Kraftfahrzeug einzubauen ist. Dieser Behälter 210 ist mit einem nach außen vorstehenden Stutzen 212 versehen, der eine Öffnung 214 begrenzt. Derartige Kraftstoffbehälter werden im allgemeinen im Blasverfahren aus thermoplastischem Kunststoff hergestellt, wobei der Stutzen 212 an seinem freien Ende zunächst verschlossen ist. Die Öffnung 214 wird normalerweise durch einen besonderen Schneidvorgang hergestellt.

Die Öffnung 214 wird durch einen Halterungsdeckel 216 verschlossen, der normalerweise aus einem anderen Werkstoff besteht als der Kraftstoffbehälter 210. Der Halterungsdeckel 216 kann aus einem metallischen Werkstoff, ggf. jedoch auch aus einem Kunststoff hergestellt sein, der sich von dem Kunststoff, aus dem der Kraftstoffbehälter 210 besteht, durch größere Härte unterscheidet. Blasgeformte Kraftstoffbehälter aus Kunststoff werden im allgemeinen aus einem Polyolefin hergestellt.

Bei dem in der Zeichnung dargestellten Ausführungsbeispiel dient der Halterungsdeckel 216 zur Halterung von Leitungsabschnitten 18, mittels welcher eine Verbindung zwischen dem Inneren des Kraftstoffbehältes 210 und der äußeren Umgebung hergestellt wird. Diese Leitungsabschnitte 218 können Teile von Entnahmeleitungen oder sonstigen Einrichtungen sein, die innerhalb des Kraftstoffbehälters 210 angeordnet sind und außerhalb des Kraftstoffbehälters befindliche Anschlüsse erfordern.

Der Stutzen 212 ist stirnseitig mit einer umlaufenden Nut 230 versehen, deren Querschnitt sich von der stirnseitigen Begrenzungsfläche des Stutzens 212 in Richtung auf das Nuttiefste gleichmäßig verjüngt. Die Nut 230 dient zur Aufnahme eines Dichtrings 234, dessen Querschnittsabmessungen in Relation zur Tiefe der Nut 230 so gewählt sind, daß der Dichtring einerseits in unbeanspruchtem Zustand nach oben etwas über die stirnseitige Begrenzungsfläche hinausragt, wobei jedoch andererseits der Querschnitt des Dichtringes 234 nicht größer ist als der der Nut 230, so daß in der in Fig. 1 dargestellten Betriebslage der Teile, in welcher der Halterungsdeckel 216 auf der stirnseitigen Begrenzungsfläche des Stutzens 12 aufliegt, der Dichtring 234 völlig von der Nut 230 aufgenommen wird. Der Querschnitt der Nut kann etwas größer sein als der des Dichtrings 234. Wichtig ist, daß letzterer durch den auf der stirnseitigen Begrenzungsfläche aufsitzenden Halterungsdeckel 216 der Dichtring 234 eine elastische Verformung und damit Vorspannung erhält, die ausreicht, um eine Abdichtung zu bewirken, die allen Anforderungen des praktischen Betriebes genügt. Andererseits ist die elastische Verformung, die der Dichtring 234 durch den auf die stirnseitige Begrenzungsfläche des Stutzens 212 aufgesetzten Halterungsdeckel 216 erfährt, zu gering als daß dadurch eine ins Gewicht fallende Kraftübertragung stattfinden könnte, da der Halterungsdeckel 216 mit seinem Randbereich flächig auf der stirnseitigen Begrenzungsfläche des Stutzens 212 aufsitzt. Bei dieser Anordnung ist der Dichtring 234 kein Teil der tragenden, also lastaufnehmenden Struktur der Verbindung zwischen Stutzen 212 und Halterungsdeckel 216.

Bei der Ausführungsform gemäß Fig. 1 erfolgt die Befestigung des Halterungsdeckels 216 unter Verwendung eines Klemmrings 236, der in seinem äußeren Randbereich mit Fortsätzen 238 versehen ist, die mit einem Haltering 240 zusammenwirken, der außen am Stutzen 212 fest angebracht ist. Der Klemmring 236 und Haltering 240 wirken in üblicher Weise nach Art eines Bajonettverschlusses zusammen. Die Fortsätze 238 des Klemmringes werden im Zuge einer Drehbewegung desselben in Eingriff mit der Führungsfläche 242 des jeweiligen Halteabschnittes 244 am Haltering 240 gebracht, wobei aufgrund einer entsprechenden Neigung der Führungsflächen in Umfangsrichtung im Zuge der Drehbewegung in üblicher Weise die Klemmung der zusammenwirkenden Teile erfolgt. Die Drehbewegung kann unter Verwendung eines geeigneten Werkzeuges durchgeführt werden, für dessen Eingriff öffnungen vorgesehen sind.

Diese Ausführung ermöglicht, wie auch die gemäß Fig. 2, die schnelle Herstellung einer einfachen Verbindung zwischen Kraftstoffbehälter und Halterungsdeckel, die einerseits über einen langen Zeitraum wirksam bleibt, andererseits im Bedarfsfall, beispielsweise bei einer Reparatur, schnell gelöst und auch wieder hergestellt werden kann.

Die Ausführungsform gemäß Fig. 1 weist einen Paßring 248 auf, der den Stutzen 212 außenseitig umgibt und dessen flanschartigen Außenrand 229 untergreift. Dieser Paßring, der gesondert hergestellt wird und geteilt oder sonstwie in geeigneter Weise so ausgeführt ist, daß er auseinandergebogen werden kann, um über den Stutzen 212 geführt zu werden, dient lediglich dazu, die Formgebung des Halteringes 240 für den Bajonettverschluß zu vereinfachen. Die Anpassung des Halteringes 240 an die äußere Profilierung des Stutzens 212 minde mehrere Formgebungsvorgänge erfordern, die einigermaßen aufwendig sind. Zwar muß der geteilte Paßring 248 bezüglich seiner innenseitigen Begrenzung ebenfalls an das außenseitige Profil des Stutzens 212 angepaßt sein. Dies erfordert jedoch beim Herstellen des Paßringes 248 beispielsweise im Spritzgießverfahren keinen Mehraufwand. Andererseits kann der Paßring 248 außenseitig so begrenzt sein, daß er im wesentlichen ebenflächig ist und demzufolge nur einen geringen Formgebungsaufwand für den Haltering 240 erfordert, der an seiner dem Körper des Kraftstoffbehälters 210 zugekehrten Seite mit einem nach innen abgebogenen Flansch 250 versehen sein kann. Letzterer untergreift den Paßring 248, so daß der Haltering 240 formschlüssig mit dem Paßring 248 verbunden ist. Dieser ist im Querschnitt L-förmig ausgebildet, wobei der den flanschartigen Rand 229 des Stutzens 214 hintergreifende Schenkel 252 des Paßringes einen wirksamen Formschluß zwischen Paßring und Stutzen bewirkt, so daß der Haltering 240 trotz des Fehlens eines unmittelbaren Kontaktes mit dem Stutzen 214 in jedem Fall in seiner Betriebslage gehalten wird. Der Paßring wird zweckmäßigerweise aus einem Kunststoff hergestellt, der härter ist als der Kunststoff, aus welchem der Kraftstoffbehälter besteht. - Der Klemmring 236 ist zur Sicherung desselben in der Klemmposition an den Fortsätzen 238 mit Vorsprüngen 254 versehen, die am Ende seiner die feste Verbindung zwischen Halterungsdeckel 216 und Kraftstoffbehälter 210 bewirkenden Drehbewegung in entsprechende Ausnehmungen am Haltering 240 eingreifen und somit einen zusätzlichen Formschluß bewirken, der nur durch Aufbringen einer entgegen der die Verbindung herstellenden Drehbewegung wirkenden Mindestkraft aufgehoben werden kann.

Bei der Ausführungsform gemäß Fig. 2 sind jene Teile, die mit denen der Ausführungsform gemäß Fig. 1 übereinstimmen, mit gleichen, jedoch um 100 höheren Bezugszeichen versehen. Hier erfolgt die Herstellung der Verbindung zwischen dem Halterungsdeckel 316 und dem Stutzen 312 des Kraftstoffbehälters 310 durch eine Überwurfmutter 356, die auf einen Gewindering 358 aufgeschraubt wird, der außenseitig am Stutzen 312 diesen umgebend angeordnet und ähnlich ausgebildet ist, wie der Paßring 248 der Ausführungsform gemäß Fig. 1. Der Schenkel 352 des Gewinderinges hintergreift den flanschartigen Außenrand 329 des Stutzens 312, der stirnseitig mit der den Dichtring 334 aufnehmenden Nut 330 versehen ist. Der Gewindering 358 ist ebenfalls derart geteilt ausgebildet, daß er etwas aufgebogen werden kann, um ihn über den Stutzen 312 zu führen und in die in Fig. 2 dargestellte Betriebslage zu bringen. Gewindering 358 und Überwurfmutter 356 können aus Kunststoff hergestellt sein, der allerdings härter sein sollte als der Kunststoff, aus welchem der Kraftstoffbehälter 310 besteht. Abweichend vom Ausführungsbeispiel gemäß Fig. 1 ist jenes gemäß Fig. 2 mit einer im Profil etwa rechteckigen Nut 330 versehen.

## Patentansprüche

1. Insbesondere aus thermoplastischem Kunststoff bestehender Kraftstoffbehälter (210, 310), der zum Einbau in ein Kraftfahrzeug bestimmt ist, mit einer Öffnung (214) in der Behälterwandung, die durch einen für das Halten von zum Beispiel Leitungen, Füllstandsanzeigern, Pumpen vorgesehenen Halterungsdeckel (216; 316) unter Zwischenschaltung eines vorzugsweise als O-Ring ausgebildeten Dichtringes (234; 334) verschlossen ist, und mit einem Befestigungsmittel (136; 356) für den Halterungsdeckel (216; 316), durch welches dieser in Richtung auf die Behälterwandung beaufschlagt ist, wobei der Dichtring (134; 234) in einer Nut (230; 330) am Behälter (210) oder am Halterungsdeckel (116) angeordnet ist und die Querschnitte von Nut (230; 330) und Dichtring (234; 334) so gewählt sind, daß der Halterungsdeckel (216; 316) in seiner die Öffnung (214; 314) verschließenden Betriebsposition an der Behälterwandung anliegend unmittelbar von dieser abgestützt wird, **dadurch gekennzeichnet**, daß ein die Öffnung (214) umschließender Stutzen (212, 312) an seiner Stirnfläche mit der Nut (230; 330) versehen ist und von einem geteilten Paßring (248, 358) umgeben ist, der mit seinem nach innen gerichteten Fortsatz (252, 352) einen flanschartigen Außenrand (229, 329) des Stutzens (312) hintergreift und den Haltering (240, 358) trägt.

2. Kraftstoffbehälter nach Anspruch 1, **dadurch gekennzeichnet**, daß der Paßring (248) außenseitig mit einem Gewinde versehen ist und der Haltering als Überwurfmutter (356) ausgebildet ist, der auf das Gewinde am Gewindering (358) aufschraubbar ist.

3. Kraftstoffbehälter nach Anspruch 1, **dadurch gekennzeichnet**, daß der flanschartige Außenrand (259, 329) mit der den Dichtring (234, 334) aufnehmenden Nut (230, 330) versehen ist.

4. Kraftstoffbehälter nach Anspruch 1, **dadurch gekennzeichnet**, daß der Paßring (248, 358) aus einem Kunststoff hergestellt ist, der härter ist als der Kunststoff, aus welchem der Kraftstoffbehälter besteht.

5. Kraftstoffbehälter nach Anspruch 1, **dadurch gekennzeichnet**, daß der Querschnitt der den Dichtring (234) aufnehmenden Nut (230) sich von ihrer offenen Seite zum Nuttiefsten hin vorzugsweise gleichmäßig verjüngt.

## Claims

1. A fuel tank (210, 310) which in particular comprises thermoplastic material and which is intended for fitting in a motor vehicle, having an opening (214) in the tank wall which is closed by a holding cover (216; 316) provided for holding for example conduits, filling level indicators and pumps, with the interposition of a sealing ring (234; 334) which is preferably in the form of an O-ring, and a fixing means (136; 356) for the holding cover (216; 316) by which the latter is urged towards the tank wall, wherein the sealing ring (134; 234) is arranged in a groove (230; 330) on the tank (210) or on the holding cover (116) and the cross-sections of the groove (230; 330) and the sealing ring (234; 334) are so selected that in its operative position of closing the opening (214; 314) the holding cover (216; 316) is directly supported by the tank wall bearing thereagainst, characterised in that a connection portion (212, 312) surrounding the opening (214) is provided at its end face with the groove (230; 330) and is embraced by a dividing fitting ring (248, 358) which with its inwardly directed extension (252, 352) engages behind a flange-like outer rim (229, 329) of the connection portion (312) and carries the holding ring (240, 358).

2. A fuel tank according to claim 1 characterised in that the fitting ring (248) is provided on the outside with a screwthread and the holding ring is in the form of a coupling ring (356) which can be screwed on to the screwthread on the screwthreaded ring (358).

3. A fuel tank according to claim 1 characterised in that the flange-like outer rim (259, 329) is provided with the groove (230, 330) for receiving the sealing ring (234, 334).

4. A fuel tank according to claim 1 characterised in that the fitting ring (248, 358) is made from a plastic material which is harder than the plastic material of the fuel tank.

5. A fuel tank according to claim 1 characterised in that the cross-section of the groove (230) accommodating the sealing ring (234) preferably uniformly tapers from its open side to the deepest part of the groove.

## Revendications

1. Réservoir à carburant (210; 310) fabriqué en particulier à partir de matière plastique thermoplastique, destiné à venir s'adapter dans un véhicule, muni d'une entrée (214) ménagée dans la paroi de réservoir qui est formée par un couvercle de fixation (216 ; 316) prévu pour le maintien, par exemple, des conduits, d'indicateurs de niveau de remplissage et de pompes, par interposition d'une bague d'étanchéité (234 ; 334) se présentant de préférence sous forme d'un joint torique, et avec un moyen de fixation (236 ; 356) pour le couvercle de fixation (216 ; 316) par l'intermédiaire duquel ledit couvercle de fixation est amené en direction de la paroi du réservoir, la bague d'étanchéité (234 ; 334) étant disposée dans une rainure (230 ; 330) sur le réservoir (210) ou sur le couvercle de fixation (216) et les coupes transversales de la rainure(230 ; 330) et de la bague d'étanchéité (234 ; 334) sont choisies de telle sorte que le couvercle de fixation (216 ; 316) dans sa position de fonctionnement fermant l'ouverture (214 ; 314), accolé sur la paroi du réservoir, soit immédiatement soutenu par celle-ci, caractérisé en ce qu'une tubulure (212, 312) entourant l'ouverture (214) est munie sur sa face frontale d'une rainure (230 ; 330) et entourée d'une bague pour douille fendue (248 ; 358), venant en prise par derrière, avec un prolongement (252, 352) orienté vers l'intérieur, tandis qu'un bord extérieur (229, 329) du type bride de tubulure (312) porte la bague de retenue (240, 356).

2. Réservoir à carburant selon la revendication 1, caractérisé en ce que la bague pour douille (358) est pourvue sur son côté extérieur d'un filetage et en ce que la bague de retenue a la forme d'un écrou d'accouplement (356), qu'on peut visser sur le filetage de la bague filetée (358).

3. Réservoir à carburant selon la revendication 1, caractérisé en ce que le bord extérieur (259, 329) du type bride est muni de la rainure (230,330) recevant le joint d'étanchéité (234, 334).

4. Réservoir à carburant selon la revendication 1, caractérisé en ce que la bague pour douille (248, 358) est fabriquée dans une matière plastique plus dure que la matière plastique dont est fait le réservoir à carburant.

5. Réservoir à carburant selon la revendication 1, caractérisé en ce que la coupe transversale de la rainure (230) recevant la bague d'étanchéité (234) s'amincit depuis son côté ouvert jusqu'au point le plus profond de la rainure, de préférence de manière uniforme.
